# EUROPEAN PATENT APPLICATION

(11) **EP 4 663 329 A1**
(43) Date of publication of application: **17.12.2025**
(21) Application number: 25179055.6
(22) Date of filing: 27.05.2025
(51) Int. Cl.: B23K 9/12, B23K 9/067

(54) **SYSTEMS AND METHODS TO START ARC WELDING**

(30) Priority: 28.05.2024 US 202463652264 P; 13.05.2025 US 202519207173
(71) Applicant: Illinois Tool Works Inc., Glenview IL 60025 (US)
(72) Inventor: KNOENER, Craig Steven, Glenview, 60025 (US)
(74) Representative: HGF

(57) **Abstract**

A welding system comprises: a wire feeder configured to feed wire to a welding torch; a power conversion circuitry configured to convert input power to welding power; and control circuitry configured to: control the power conversion circuitry to output a touch detection signal to a weld circuit comprising the wire; monitor the weld circuit to detect a short circuit condition; in response to detection of the short circuit condition: control the power conversion circuitry to output an arc-starting power to the weld circuit, and control the wire feeder to hold the wire in a stopped condition; while the wire feeder is in the stopped condition, monitor the weld circuit to detect a welding arc; and in response to detection of the welding arc: control the power conversion circuitry to output the welding power to the weld circuit; and control the wire feeder to transition to advancing the wire.

## Description

### RELATED APPLICATIONS

The present application claims the benefit of U.S. Provisional Patent Application Serial No. 63/652,264, filed May 28, 2024, entitled "SYSTEMS AND METHODS TO START ARC WELDING." The entirety of U.S. Provisional Patent Application Serial No. 63/652,264 is expressly incorporated herein by reference.

### FIELD OF THE DISCLOSURE

This disclosure relates generally to welding systems and, more particularly, to systems and methods to start arc welding.

### BACKGROUND

Welding components (e.g., welding torches) are sometimes powered by welding power supplies. Conventional power supplies use a range of electrical components and/or electrical circuitry to produce appropriate welding power for various welding operations and/or welding components.

Conventional short circuit gas metal arc welding (GMAW), also referred to as metal inert gas (MIG) welding, is a welding process in which an electric arc forms between an electrode and pieces of metal that are to be welded. The electric arc generates heat that causes the pieces of metal to melt. Upon cooling down of the melted pieces of metal, the pieces of metal join and form a weld. Electrical and/or physical parameters can be adjusted to give the best electric arc possible and improve the overall welding process.

### SUMMARY

Systems and methods to start arc welding are disclosed, substantially as illustrated by and described in connection with at least one of the figures, as set forth more completely in the claims.

### BRIEF DESCRIPTION OF THE DRAWINGS

FIG. 1 illustrates an example welding system, in accordance with aspects of this disclosure;
FIG. 2A illustrates a graph of example currents in the system of FIG. 1 during initiation of a welding arc, in accordance with aspects of this disclosure;
FIG. 2B illustrates a graph of example wire feed speeds in the system of FIG. 1 during initiation of a welding arc, in accordance with aspects of this disclosure;
FIGS. 3A-3D illustrate an example sequence of electrode and workpiece contact during initiation of a welding arc, in accordance with aspects of this disclosure; and
FIG. 4A illustrates a flowchart representative of example machine readable instructions which may be executed by the welding system of FIG. 1 to control initiation of a welding arc, in accordance with aspects of this disclosure;
FIG. 4B illustrates a flowchart representative of example machine readable instructions which may be executed by the welding system of FIG. 1 during the execution of the example machine readable instructions of FIG. 4A to control a short circuit detection timeout process, in accordance with aspects of this disclosure;
FIG. 4C illustrates a flowchart representative of example machine readable instructions which may be executed by the welding system of FIG. 1 during the execution of the example machine readable instructions of FIG. 4A to control a welding arc detection timeout process, in accordance with aspects of this disclosure; and
FIG. 4D illustrates a flowchart representative of example machine readable instructions which may be executed by the welding system of FIG. 1 during the execution of the example machine readable instructions of FIG. 4A to control welding power output during a stitch welding operation, in accordance with aspects of this disclosure.

The figures are not necessarily to scale. Where appropriate, similar or identical reference numbers are used to refer to similar or identical components.

### DETAILED DESCRIPTION

Conventional arc initiation techniques involve advancing (e.g., running in) a wire electrode to touch a workpiece. When the wire electrode contacts the workpiece, a weld circuit is completed and current begins to flow. This conventional arc initiation technique requires a large amount of energy to ignite the weld arc, and the weld current is typically in a range of 350-500 amps. When the arc does ignite, the large amount of energy flowing through the wire tends to result in large amounts of spatter. After the arc initiation, the wire feed rate and/or power source energy are ramped from starting parameters to steady-state welding parameters.

Some conventional arc initiation techniques involve retracting the wire (referred to as retract arc starts). Conventional retract arc starts are similar to conventional arc initiation in that the wire is advanced toward the workpiece at a reduced rate and touches the plate. A lower current is used to ignite the arc. Typical currents in retract arc starts may be 20-100 amps. The arc is ignited with the aid of a mechanical process in which the wire is retracted out of contact with the workpiece (referred to as wire retraction) by reversing the direction of a wire feeding motor. The welding wire may be retracted upon detection of the welding wire contacting the workpiece. As the wire is retracted, the current is increased to 50-125 amps to support the arc. As the wire is retracted back at this current, the short circuit between the wire and the workpiece is cleared and the wire retraction initiates an arc. After the arc initiation, the wire feed rate and/or power source energy are ramped from starting parameters to steady-state welding parameters.

Conventional retract arc starts can introduce undesirable concerns to the setup and/or execution of a welding operation and/or to the design of hardware and/or software used to conduct a welding operation. For example, conventional retract starts can introduce or exacerbate an importance of reducing slack in welding wire between push motor drive rolls of a welding wire feeder and a contact tip of a welding torch receiving the welding wire. Slack between the push motor drive rolls and the contact tip can reduce a response time of retraction of the welding wire relative to the contact tip upon reversing the direction of the wire feeding motor. Further, slack between the push motor drive rolls and the contact tip can reduce a retraction speed and/or acceleration of the welding wire when the wire feeding motor is operating in a reversed direction.

Further, conventional retract starts can require a motor of a wire feeder to be capable of providing significant torque during the retraction of a wire compared to amounts of torque used throughout the remainder of a welding operation. Retraction of the welding wire may be desired to be initiated as soon as possible upon detecting contact with the workpiece, and so rapidly halting and, subsequently, reversing the movement of the welding wire upon contact can require significant torque. Additionally, a power supply for the wire feeder may be required to have a capacity to deliver significantly more power to the wire feeder during retraction, on account of the significant torque which the wire feeder must apply.

Further, due to the importance of detection of contact by the welding wire with the workpiece, usage of conventional retract starts may be limited or otherwise experience difficulty if any insulator (e.g., oxides, oils, paint, etc.) are present on a surface of the welding wire and/or a surface of the workpiece. Such insulators can decrease a capacity for contact detection, thereby causing the wire feeder to continue to advance the welding wire into the workpiece. Such continued advancement can cause the welding torch to push up, the welding wire to bend, excessive wire to be provided between the contact tip and the workpiece, and/or the welding operation to start poorly.

Finally, conventional retract starts may be time-consuming, on account of the time required to advance the welding wire to contact the workpiece, retract the welding wire and, subsequently, re-initiate advancing of the welding wire. Accordingly, conventional retract starts can increase the amount of time necessary to initiate a welding arc. Such increases in the amount of time necessary to initiate a welding arc may be particularly cumbersome when a welding operator is conducting repeated, short welds.

Disclosed example methods, systems, and apparatuses involve detecting contact between an electrode and a workpiece while power conversion circuitry is not outputting welding power to the electrode. When the contact is detected, a wire feeder can be controlled to hold the electrode in a stopped condition relative to the wire feeder while the power conversion circuitry is controlled to output an arc-starting power to the electrode. Accordingly, a welding arc can be detected while the electrode is in the stopped condition. When a welding arc is detected, the wire feeder can be controlled to transition to advancing the welding wire while the power conversion circuitry is controlled to output the welding power.

As used herein, the term "electrode" includes any consumable or non-consumable material which may be controllably provided to a welding torch by welding equipment and which may conduct a weld current (e.g., welding wire).

As used herein, the term "welding power" refers to power suitable for welding, plasma cutting, induction heating, CAC-A and/or hot wire welding/preheating (including laser welding and laser cladding). As used herein, the term "welding power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "weld voltage setpoint" refers to a voltage input to the power converter via a user interface, network communication, weld procedure specification, or other selection method. As used herein, a "weld current setpoint" refers to a current input to the power converter via a user interface, network communication, weld procedure specification, or other selection method.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a "circuit" may comprise any analog and/or digital components, power and/or control elements, such as a microprocessor, digital signal processor (DSP), software, and the like, discrete and/or integrated components, or portions and/or combinations thereof. As used herein, for example, a particular processor and memory may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

Features described herein make reference to the accompanying drawings in which exemplary embodiments of the disclosure are shown. Whenever possible, the same reference numerals are used throughout the drawings to refer to the same or like parts. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

Unless otherwise expressly stated, it is in no way intended than any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. While various features, elements or steps of particular embodiments can be disclosed using the transitional phrase "comprising," it is to be understood that alternative embodiments, including those that can be described using the transitional phrases "consisting" or "consisting essentially of," are implied. Thus, for example, implied alternative embodiments to an apparatus that comprises A+B+C include embodiments where an apparatus consists of A+B+C and embodiments where an apparatus consists essentially of A+B+C.

Disclosed example welding systems comprise: a wire feeder configured to feed welding wire to a welding torch; a power conversion circuitry configured to convert input power to welding power; and control circuitry configured to: control the power conversion circuitry to output a touch detection signal to a weld circuit comprising the welding wire; monitor the weld circuit to detect a short circuit condition; in response to detection of the short circuit condition: control the power conversion circuitry to output an arc-starting power to the weld circuit, and control the wire feeder to hold the welding wire in a stopped condition; while the wire feeder is in the stopped condition, monitor the weld circuit to detect a welding arc; and in response to detection of the welding arc: control the power conversion circuitry to output the welding power to the weld circuit; and control the wire feeder to transition to advancing the welding wire.

In some example welding systems, the control circuitry is further configured to, in response to the detection of the welding arc: control the wire feeder to advance the welding wire based on an initial wire feed speed for a first duration; and control the wire feeder to advance the welding wire based on a target wire feed speed while outputting the welding power based on a target welding voltage. In some such example welding systems, the control circuitry is further configured to control a wire feed speed of the wire feeder to transition from the initial wire feed speed to the target wire feed speed by ramping the wire feed speed. In some example welding systems, the control circuitry is further configured to, in response to the detection of the welding arc: control the wire feeder to advance the welding wire based on an initial wire feed speed for a first duration; control the wire feeder to advance the welding wire based on a target wire feed speed while outputting the welding power based on a target welding voltage; and control a wire feed speed of the wire feeder to transition from the initial wire feed speed to the target wire feed speed by stepping the wire feed speed.

In some example welding systems, the control circuitry is further configured to: in response to detection of the welding arc, control the power conversion circuitry to output the welding power to the weld circuit for a first duration; and after the first duration, control the power conversion circuitry to output the touch detection signal. In some example welding systems, the control circuitry is further configured to: in response to a trigger signal, control the wire feeder to advance the welding wire; and in response to the detection of the short circuit condition, control the wire feeder to stop the welding wire.

In some example welding systems, the control circuitry is further configured to: determine an arc-starting current magnitude based on a contact surface area of the welding wire; and in response to the detection of the short circuit condition, control the power conversion circuitry to output the arc-starting power to the weld circuit based on the arc-starting current magnitude. In some such example welding systems, the welding system further comprises a welding torch and a camera, wherein: the welding torch is configured to receive the welding wire from the wire feeder; the camera is positioned on the welding torch in view of an end of the welding wire; the camera is configured to transmit visual data of the welding wire to the control circuitry; and the control circuitry is further configured to determine the contact surface area of the welding wire using the visual data.

In some example welding systems, the welding system further comprises a user interface configured to transmit an input signal, wherein the control circuitry is further configured to: determine an arc-starting current magnitude based on the input signal; and in response to the detection of the short circuit condition, control the power conversion circuitry to output the arc-starting power to the weld circuit based on the calculated current magnitude.

In some example welding systems, the welding system further comprises a control system configured to receive a first indication to initiate output of the touch detection signal and to transmit the first indication to the control circuitry, wherein the control circuitry is further configured to control the power conversion circuitry to output the touch detection signal to the weld circuit in response to receiving the first indication from the control system. In some such example welding systems, the welding system further comprises a welding torch configured to: receive the welding wire from the wire feeder; and conduct current from the power conversion circuitry to the welding wire. In some such example welding systems, the welding torch comprises a transducer physically coupled to the welding torch configured to actuate the welding wire to induce a motion of the welding wire; and the control circuitry is further configured to: in response to the detection of the short circuit condition, control the transducer to actuate the welding wire; and in response to detection of the welding arc, control the transducer to stop actuating the welding wire.

In some example welding systems, the welding system further comprises a welding torch and a control system configured to receive a first indication to initiate output of the touch detection signal and to transmit the first indication to the control circuitry, wherein: the control circuitry is further configured to control the power conversion circuitry to output the touch detection signal to the weld circuit in response to receiving the first indication from the control system; the welding torch is configured to: receive the welding wire from the wire feeder; and conduct current from the power conversion circuitry to the welding wire; the control system comprises a first operable input positioned on the welding torch and configured to receive the first indication by detecting a first action performed on the first operable input; and the control system is further configured to receive a second indication to advance the welding wire and transmit the second indication to the control circuitry, wherein, upon receiving the second indication, the control circuitry controls the wire feeder to advance the welding wire. In some such example welding systems, the control system further comprises a second operable input; and the control system is further configured to receive the second indication by detecting a second action performed on the second user operable input.

In some example welding systems, the touch detection signal comprises a first current magnitude; the arc-starting power comprises a second current magnitude greater than the first current magnitude; and the welding power comprises a third current magnitude greater than the second current magnitude. In some such example welding systems, the third current magnitude is based on a voltage-controlled loop and a voltage setpoint. In some example welding systems, the touch detection signal comprises a first current magnitude; the arc-starting power comprises a second current magnitude greater than the first current magnitude; the welding power comprises a third current magnitude greater than the second current magnitude; and the control circuitry is further configured to control the power conversion circuitry to ramp from the second current magnitude to the third current magnitude in response to the detection of the welding arc. In some example welding systems, the touch detection signal comprises a first current magnitude; the arc-starting power comprises a second current magnitude greater than the first current magnitude; the welding power comprises a third current magnitude greater than the second current magnitude; and the control circuitry is further configured to control the power conversion circuitry to step from the second current magnitude to the third current magnitude in response to the detection of the welding arc.

In some example welding systems, the welding system further comprises a voltage sensor configured to measure a measured voltage of the weld circuit and transmit the measured voltage to the control circuitry, wherein the control circuitry is further configured to detect the short circuit condition based on the measured voltage and detect the welding arc based on the measured voltage. In some example welding systems, the welding system further comprises a current sensor configured to measure a measured current of the weld circuit and transmit the measured current to the control circuitry, wherein the control circuitry is configured to detect the short circuit condition based on the measured current and detect the welding arc based on the measured current.

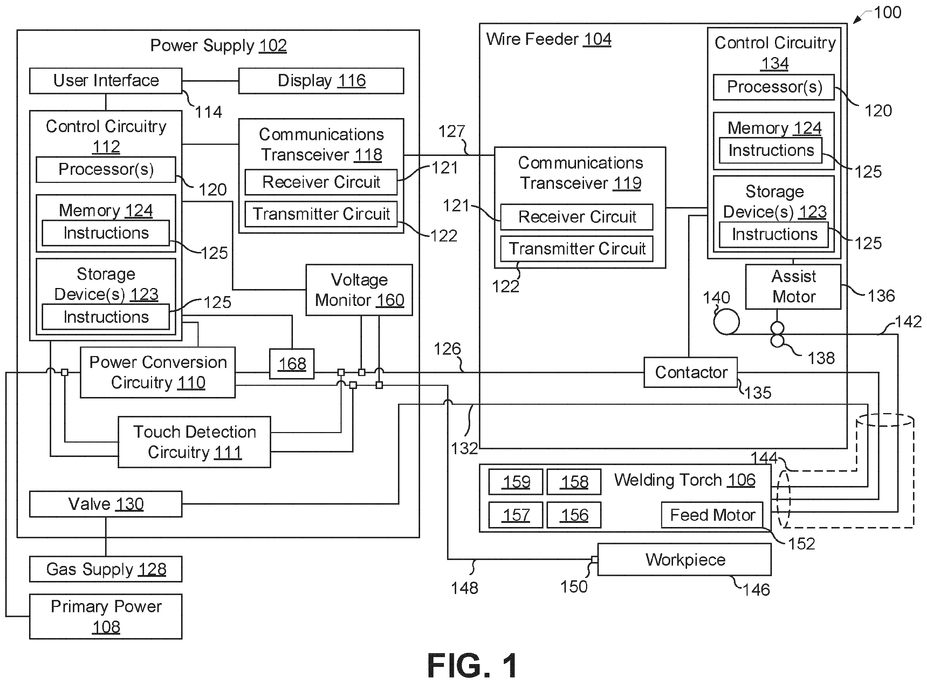

Turning now to the drawings, FIG. 1 is a block diagram of an example welding system 100 having a power supply 102, a wire feeder 104, and a welding torch 106. The welding system 100 powers, controls, and supplies consumables (e.g., an electrode) to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example welding system 100 of FIG. 1 includes a wire feeder 104 (e.g., for GMAW or FCAW operations), the wire feeder 104 may be replaced by any other type of remote accessory device, such as a stick welding and/or TIG welding remote control interface that provides stick and/or TIG welding.

The power supply 102 receives primary power 108 (e.g., from an AC power grid, an engine/generator set, a battery, or other energy generating or storage devices, or a combination thereof), conditions the primary power 108, and provides an output power to one or more welding devices in accordance with demands of the welding system 100. The primary power 108 may be supplied from an offsite location (e.g., the primary power 108 may originate from the power grid). The power supply 102 includes power conversion circuitry 110, which may include transformers, rectifiers, switches, and so forth, capable of converting the AC input power to AC and/or DC output power as dictated by the demands of the welding system 100 (e.g., particular welding processes and regimes). The power supply 102 further includes touch detection circuitry 111, which may include transformers, rectifiers, switches, and so forth, capable of converting the AC input power to AC and/or DC output power in the form of a touch detection signal. In some examples, the touch detection circuitry 111 is a component of the power conversion circuitry 110. In other examples, the touch detection circuitry 111 is separate from the power conversion circuitry 110. In some such examples, the touch detection circuitry 111 is a component of the wire feeder 104. In some examples, the power conversion circuitry 110 can, itself, generate a touch detection signal without the touch detection circuitry 111. Accordingly, some such examples do not include the touch detection circuitry 111.

The power conversion circuitry 110 can convert input power (e.g., the primary power 108) to welding power based on a weld voltage setpoint and/or a weld current setpoint and output the welding power via a weld circuit. In some examples, the power conversion circuitry 110 is configured to convert the primary power 108 to both welding power and one or more auxiliary power outputs. In some examples, the power conversion circuitry 110 can convert input power (e.g., the primary power 108) to a touch detection signal based on a touch detection voltage setpoint and/or a touch detection current setpoint and output the touch detection signal via the weld circuit. In some examples, the power conversion circuitry 110 can convert input power (e.g., the primary power 108) to an arc-starting power based on an arc-starting voltage setpoint and/or an arc-starting current setpoint and output the arc-starting power via the weld circuit. In other examples, the power conversion circuitry 110 is adapted to convert input power only to a welding power output.

The power supply 102 includes control circuitry 112 to control the operation of the power supply 102. The power supply 102 also includes a user interface 114. The control circuitry 112, which is also referred to as a "controller," receives input from the user interface 114, through which a user may choose a process and/or input desired parameters (e.g., voltages, currents, setpoints, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the welding system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via a communications transceiver 118, as described below.

The control circuitry 112 includes at least one controller or processor 120 that controls the operations of the power supply 102. The control circuitry 112 receives and processes multiple inputs associated with the performance and demands of the welding system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage, one or more non-transitory computer-readable medium(s)) may include ROM, flash memory, a hard drive, and/or any other suitable optical, magnetic, and/or solid-state storage medium(s), and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch (e.g., the welding torch 106), a distance between the contact tip and a workpiece (e.g., the workpiece 146), a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 may be communicatively coupled to the weld cable 126 to communicate (e.g., send/receive) data over the weld cable 126. The communications transceiver 118 may be implemented based on various types of power line communications methods and techniques. For example, the communications transceiver 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications transceiver 118 and a similar communications transceiver 119 of the wire feeder 104.

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding operation) and/or after the weld current has stopped flowing through the weld circuit (e.g., after a welding operation).

Example implementations of the communications transceiver 118 are described in U.S. Patent No. 9,012,807. The entirety of U.S. Patent No. 9,012,807 is incorporated herein by reference. However, other implementations of the communications transceiver 118 may be used.

The example wire feeder 104 also includes a communications transceiver 119, which may be similar or identical in construction and/or function as the communications transceiver 118.

The example power supply 102 includes a voltage monitor 160 and a current monitor 168. The voltage monitor 160 monitors an output voltage from the power supply 102. The output voltage may be controlled by the power conversion circuitry 110, the touch detection circuitry 111, an external voltage source, current source, and/or load, and/or any other internal or external cause of voltage. The current monitor 168 monitors an output current. While the example current monitor 168 is illustrated monitoring the output current from the power conversion circuitry 110, the current monitor 168 may be configured to monitor any currents flowing through the output terminals of the power supply 102 and/or for any particular circuits. For example, the current monitor 168 may detect whether a current is flowing when the touch detection circuitry 111 is outputting a voltage and the power conversion circuitry 110 is disabled.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder control circuitry 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid-state device, and/or may be omitted when the power supply 102 is configured to control the output of welding power to the welding torch 106. The control circuitry 112 and/or the wire feeder control circuitry 134 may control the contactor 135 to close and/or open to provide power to the welding torch 106. The wire feeder 104 includes an assist motor 136 that receives control signals from the wire feeder control circuitry 134 to drive rollers 138 that rotate to pull an electrode 142 (e.g., welding wire) off a spool 140. The spool 140 may be, e.g., a spool of wire when the electrode 142 is welding wire. The spool 140 may be any mechanically-retrievable storage mechanism for the electrode 142. The electrode 142 is provided to the welding application through a torch cable 144. Likewise, the wire feeder 104 may provide the shielding gas from the cable 132 through the torch cable 144. The electrode 142, the shield gas, and the power from the weld cable 126 may be bundled together in a single one of the torch cable 144, in multiple ones of the torch cable 144, and/or individually provided to the welding torch 106.

The welding torch 106 delivers the electrode 142, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The example welding torch 106 includes a feed motor 152, which is configured to pull the electrode 142 from the wire feeder 104 to the welding torch 106 to feed the wire to a welding arc during welding operations. The feed motor 152 may be controlled to advance the electrode 142 at one or more wire feed speeds. The feed motor 152 may also be controlled to hold the electrode 142 in a stopped condition. When controlled to hold the electrode 142 in a stopped condition, the feed motor 152 is controlled to neither advance nor retract the electrode 142 relative to the feed motor 152. Rather, when controlled to hold the electrode 142 in the stopped condition, the feed motor 152 is controlled to hold the electrode 142 in place relative to the feed motor 152. Changing wire speeds may be used in some welding processes to reduce spatter and/or achieve desired welding results.

The assist motor 136 may operate as an assist motor to pull the electrode 142 from the spool 140 and feed the electrode 142 toward the welding torch 106, while the example feed motor 152 advances the electrode 142 and/or holds the electrode 142 in a stopped condition to control short circuiting and/or arc length during welding. In examples, either or both the feed motor 152 and/or the assist motor 136 are not capable of retracting the electrode 142. In other examples, either or both of the feed motor 152 and/or the assist motor 136 are capable of retracting the electrode 142. In some examples, the welding torch 106 does not include the feed motor 152. In some examples, the wire feeder 104 does not include the assist motor 136.

In the example of FIG. 1, the welding torch 106 includes one or more operable inputs 156 positioned on the welding torch 106. Each of the operable inputs 156 may include any, some, or all of a physical device (e.g., a button, trigger, switch, a slider, etc.), a graphic on a user interface, or another actuate-able tool which may be actuated via one or more actions to provide one or more signals to control or otherwise provide information to any, some, or all of the control circuitry 112, the wire feeder control circuitry 134, and/or other control circuitry via, e.g., the torch cable 144. The operable inputs 156 are each actuatable to produce only a single respective signal. In other examples, one or more of the operable inputs 156 are each actuatable to produce a plurality of respective signals. In some such examples, different actions performed upon one or more of the operable inputs 156 produce different signals. For example, a first action (e.g., a hold of a button for a pre-determined length of time) performed upon one of the operable inputs 156 may produce a first signal, while a second action (e.g., a double tap of the button) performed upon the same one of the operable inputs 156 may produce a second signal.

Each of the one or more operable inputs 156, when actuated, provides one or more input signals to any, some, or all of the power supply 102 (e.g., the control circuitry 112), the wire feeder 104 (e.g., the wire feeder control circuitry 134), and/or one or more other devices and/or systems. Input signals may include one or more indications to control and/or operate one or more devices, components, software, and/or systems according to one or more pre-determined commands. In some examples, an input signal includes an indication to initiate output of a touch detection signal. In some examples, an input signal includes an indication to initiate output of arc-starting power. In some examples, an input signal includes an indication to initiate output of welding power. In some examples, an input signal includes an indication to control the feed motor 152 and/or the assist motor 136 to advance the electrode 142. In some such examples, the input signal is a trigger signal generated by actuating a welding torch trigger (e.g., positioned on the welding torch 106) of the one or more operable inputs 156.

In some examples, one or more of the operable inputs 156 each generate a plurality of input signals, and provide each of the input signals to any, some, or all of the power supply 102 (e.g., the control circuitry 112), the wire feeder 104 (e.g., the wire feeder control circuitry 134), and/or one or more other devices and/or systems. In some examples, a first input signal of a plurality of input signals includes a first indication to initiate output of a touch detection signal. In some such examples, a second input signal of the plurality of input signals includes a second indication to advance the electrode 142. In some examples, a first operable input of the operable inputs 156, when actuated by detecting a first action (e.g., a three-second hold of a button of the operable inputs 156), generates a first input signal. In some such examples, the first operable input of the operable inputs 156, when actuated by detecting a second action (e.g., a double tap of the button of the operable inputs 156), generates a second input signal. In some examples, a first operable input of the operable inputs 156, when actuated, generates a first input signal, and a second operable input of the operable inputs 156, when actuated, generates a second input signal. In examples, any, some, or all of the operable inputs 156 generate only one input signal. In examples, any, some, or all of the operable inputs 156 generate any plurality of input signals.

In some examples, one or more of the operable inputs 156 are positioned on any, some, or all of the welding torch 106, the power supply 102 (e.g., the user interface 114), and/or the wire feeder 104. In some examples, the welding system 100 includes a control system comprising a plurality of the operable inputs 156. In some such examples, each of the operable inputs 156 of the control system is positioned on any of the power supply 102, the wire feeder 104, or the welding torch 106. In some examples, the welding torch 106 includes only one of the operable inputs 156. In other examples, the welding torch 106 includes any plurality of the operable inputs 156. In some examples, the welding torch 106 includes a communications transceiver 157 which may communicate with any, some, or all of the communications transceiver 118, the communications transceiver 119, and/or one or more other communications transceivers. In some examples, the communications transceiver 157 may include similar components as and/or be similarly configured as either or both of the communications transceivers 118, 119. For example, the communications transceiver 157 may include a respective receiver circuit 121 and transmitter circuit 122.

In some examples, the welding torch 106 includes a transducer 158 physically coupled to the welding torch 106. The transducer 158 is controllable (e.g., by the control circuitry 112) to actuate the electrode 142 to induce a motion (e.g., vibration) of the electrode 142. In examples, the transducer 158 actuates the electrode 142 e.g., by creating one or more impulses, by periodically actuating the electrode 142, and/or by one or more other methods. By controlling the transducer 158 to actuate (e.g., vibrate) the electrode 142, the actuation causes the welding torch 106, portions of the welding torch 106, and/or the electrode 142 to move, causing the electrode 142 to move toward and away from the workpiece 146. This motion can cause a gap to establish between the electrode 142 and the workpiece 146, thereby establishing a welding arc. In some examples, the operator and/or a robot control operation of the transducer 158 via actuation of one or more of the operable inputs 156. In some examples, operation of the transducer 158 is controllable by the control circuitry 112 and/or the wire feeder control circuitry 134. In examples, in addition to and/or alternatively to including and/or using the transducer 158, the motion of the electrode 142 may be induced (in whole or in part) by an imbalanced load on the feed motor 152 and/or an imbalanced load on the assist motor 136 actuating the electrode 142. In examples, in addition to and/or alternatively to including and/or using the transducer 158, the motion of the electrode 142 may be induced (in whole or in part) by a solenoid and plunger of the welding torch 106 actuating the electrode 142. In some such examples, the solenoid, when actuated (e.g., by an electrical current), actuates the electrode 142 by pushing the plunger against the electrode 142 (e.g., perpendicular to the electrode 142) and/or another component of the welding torch 106, e.g., to push the electrode 142 toward or away from the workpiece 146.

The touch detection circuitry 111 includes circuitry configured to detect electrical contact between the welding torch 106 (e.g., the electrode 142) and the workpiece 146. For example, the touch detection circuitry 111 applies an output voltage to the output terminals of the power supply 102, which may be the same output terminals used by the power conversion circuitry 110 to output welding type power. The touch detection circuitry 111 monitors the output to detect a current, which occurs when the welding torch 106 makes electrical contact (e.g., via the electrode 142) with the workpiece 146 to close the circuit and permit the current to flow. The example touch detection circuitry 111 may be output-limited to a low current (e.g., less than 10mA), and provides a detection signal to the control circuitry 112 in response to detecting the flow of current.

To reduce or eliminate the deficiencies of conventional arc initiation techniques discussed above, the example control circuitry 112 controls the power conversion circuitry 110 to not generate an output during the initial contact between the electrode 142 and the workpiece 146. Instead, the control circuitry 112 uses the touch detection circuitry 111 to detect contact between the electrode 142 and the workpiece 146 with a current that does not risk spot welding the electrode 142 to the workpiece 146. After detection of contact, the control circuitry 112 may enable or otherwise control the power conversion circuitry 110 to output arc starting current and/or welding current to initiate the arc.

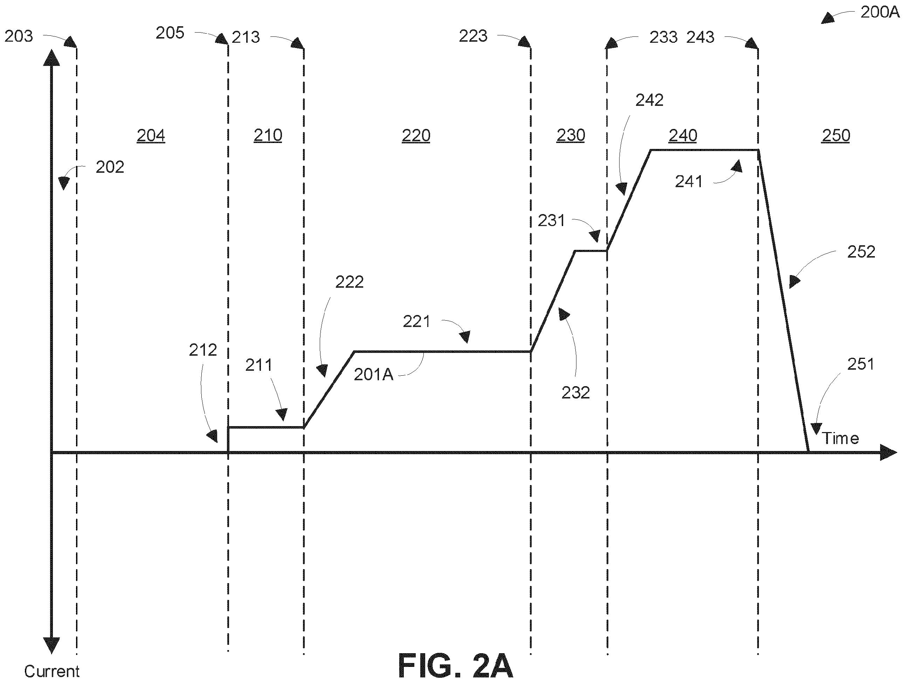

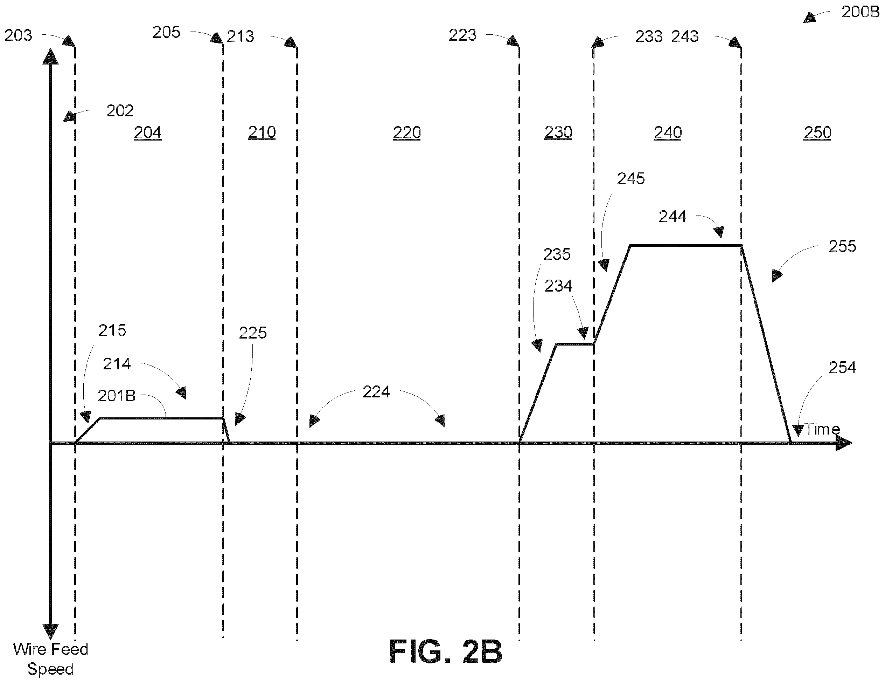

FIG. 2A is a graph 200A illustrating example measured current magnitudes in the system of FIG. 1 during a welding operation, and FIG. 2B is a graph 200B illustrating example wire feed speed commands in the system of FIG. 1 during a welding operation. Each of the graphs 200A, 200B is an illustrative example and are not necessarily to scale. Accordingly, in examples, magnitudes in current and/or wire feed speed and/or durations of any, some, or all of the time periods described herein may vary in proportion from the proportions illustrated in the graphs 200A, 200B, as described in further detail elsewhere herein.

The example graph 200A illustrates an example current feedback signal 201A (e.g., a current measured by the current monitor 168), and the example graph 200B illustrates an example wire feed speed signal 201B (e.g., a wire feed speed command output by the control circuitry 112 to the wire feeder 104).

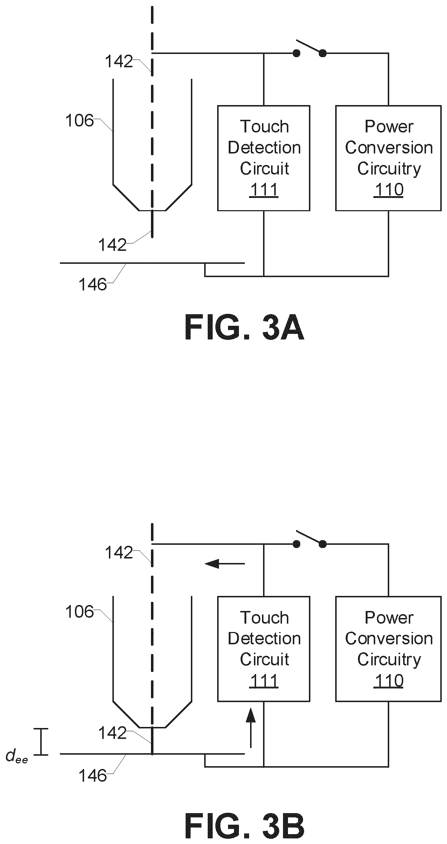

FIGS. 3A-3D illustrate a simplified example sequence of electrode and workpiece contact during initiation of a welding arc. For the sake of clarity, FIGS. 3A-3D omit elements such as the weld cable 126, the contactor 135, and the like that connect the elements shown in FIGS. 3A-3D.

In a standby time period 202, the control circuitry 112 is awaiting a welding initiation signal. Accordingly, in the standby time period 202, the signals 201A, 201B are equal to zero. Accordingly, in examples, during the standby time period 202, the power conversion circuitry 110 and/or the touch detection circuitry 111 do not output current to the electrode 142. In examples, during the standby time period 202, the feed motor 152 and/or the assist motor 136 hold the electrode 142 in a stopped condition. A welding initiation signal may be generated by the actuation of one or more of the one or more operable inputs 156. For example, the welding initiation signal may be a trigger signal generated by depression of a trigger of the operable inputs 156 positioned on the welding torch 106.

Referring to FIG. 2A, and with reference to FIG. 1, at a first time 203, the welding initiation signal is generated. In response to the welding initiation signal, the control circuitry 112 controls the touch detection circuitry 111 to output a touch detection signal to the electrode 142 (i.e., to the welding torch 106), thereby generating a voltage between the electrode 142 and the workpiece 146. During a pre-contact time period 204 starting at the first time 203, the control circuitry 112 monitors for current flow that indicates contact between the electrode 142 and the workpiece 146 by completion of a weld circuit comprising the electrode 142, the workpiece 146.

FIG. 3A illustrates a portion of the electrode 142, a portion of the welding torch 106, and the workpiece 146 during the pre-contact time period 204. As illustrated in FIG. 3A, the power conversion circuitry 110 is prevented from outputting welding power to the electrode 142. While prevention of welding power output is illustrated in FIG. 3A as an open switch physically disconnecting the power conversion circuitry 110 from the electrode 142, the control circuitry 112 may alternatively control elements of the power conversion circuitry 110 (e.g., switching elements of a switched mode power supply implementation) to prevent output of welding-type power from the power conversion circuitry 110.

Referring again to FIG. 2A, and with reference to FIG. 1, at a second time 205, the electrode 142 contacts the workpiece 146, thereby causing a short circuit condition, completing the weld circuit. The control circuitry 112 detects the contact between the electrode 142 and the workpiece 146 via the touch detection circuitry 111, as the short circuit condition causes the control circuitry 112 to detect a non-zero current output from the touch detection circuitry 111. Accordingly, during a first contacting time period 210 starting at the second time 205, the current feedback signal 201A undergoes an increase during a transition 212 to a first current magnitude 211 (i.e., a current magnitude of the touch detection signal). In some examples, the control circuitry 112 detects the short circuit condition using a voltage measured by the voltage monitor 160. In some examples, the control circuitry 112 detects the short circuit condition using a current measured by the current monitor 168.

While FIG. 2A illustrates the first current magnitude 211 (and other current magnitudes described elsewhere herein) as being substantially constant, an actual measured current may vary despite a constant control instruction of the control circuitry 112. Accordingly, for example, while the control circuitry 112 may control the power conversion circuitry 110 and/or the touch detection circuitry 111 to output the touch detection signal based on the first current magnitude 211 during the first contacting time period 210, an actual current of the touch detection signal may vary during the first contacting time period 210.

FIG. 3B illustrates a portion of the electrode 142, a portion of the welding torch 106, and the workpiece 146 during the first contacting time period 210. In the example of FIG. 3B, the weld circuit is formed by the touch detection circuitry 111, the electrode 142, and the workpiece 146 (and any intervening connecting circuitry), permitting current to flow and indicating that contact is made between the electrode 142 and the workpiece 146. In the example of FIG. 3B, when the electrode 142 is contacting the workpiece 146, the welding torch 106 is positioned an electrode extension distance (*dₑₑ*) from the workpiece 146, as defined by, e.g., a portion of the electrode 142 protruding from the welding torch 106. The power conversion circuitry 110 has not yet been enabled or controlled to output the welding power. While prevention of welding power output is illustrated in FIG. 3B as an open switch physically disconnecting the power conversion circuitry 110 from the electrode 142, the control circuitry 112 may alternatively control elements of the power conversion circuitry 110 (e.g., switching elements of a switched mode power supply implementation) to prevent output of welding-type power from the power conversion circuitry 110.

Referring to FIG. 2B, and with reference to FIGS. 1, 2A, and 3A, at the first time 203, when the welding initiation signal is generated, the control circuitry 112 controls, in the example of FIG. 2B, the feed motor 152 and/or the assist motor 136 to advance the electrode 142 at a run-in speed 214. Accordingly, during the pre-contact time period 204, the wire feed speed signal 201B undergoes an increase during a transition 215 to the run-in speed 214. At the second time 205 (i.e., upon detection of the electrode 142 contacting the workpiece 146), the control circuitry 112 controls the feed motor 152 and/or the assist motor 136 to hold the electrode 142 in a stopped condition 224. Accordingly, during the first contacting time period 210, the wire feed speed signal 201B undergoes a decrease during a transition 225 to the stopped condition 224.

While FIG. 2B illustrates the run-in speed 214 (and other speeds described elsewhere herein) as being substantially constant, an actual measured wire speed may vary despite a constant control instruction of the control circuitry 112. Accordingly, for example, while the control circuitry 112 may control the feed motor 152 and/or the assist motor 136 to advance the electrode 142 based on the run-in speed 214 during the pre-contact time period 204, an actual wire feed speed of the electrode 142 may vary during the pre-contact time period 204.

In some other examples, such as the example of FIG. 3A, during the pre-contact time period 204, the control circuitry 112 does not control the feed motor 152 and/or the assist motor 136 to advance the electrode 142, holding the electrode 142 in a stopped condition. Instead, movement of the welding torch 106 by the operator or a robot is relied on to cause the electrical contact between the electrode 142 and the workpiece 146. Accordingly, in some such other examples, the control circuitry 112 controls the feed motor 152 and/or the assist motor 136 to hold the electrode 142 in a stopped condition during both of the time periods 204, 210.

Referring again to FIG. 2A, and with reference to FIG. 1, after detecting the contact between the electrode 142 and the workpiece 146, at a third time 213, the control circuitry 112 controls the power conversion circuitry 110 to output an arc-starting power at a second current magnitude 221. In the example of FIG. 2A, the second current magnitude 221 is greater than the first current magnitude 211. Accordingly, the current feedback signal 201A undergoes an increase during a transition 222 to the second current magnitude 221. During a second contacting time period 220 starting at the third time 213, the control circuitry 112 controls the power conversion circuitry 110 to output the arc-starting power at the second current magnitude 221 until detecting a welding arc at a fourth time 223.

Referring again to FIG. 2B, and with reference to FIG. 1, during the second contacting time period 220, the control circuitry 112 controls the feed motor 152 and/or the assist motor 136 to hold the electrode 142 in a stopped condition. Accordingly, until the fourth time 223, the electrode 142 may remain substantially in contact with the workpiece 146.

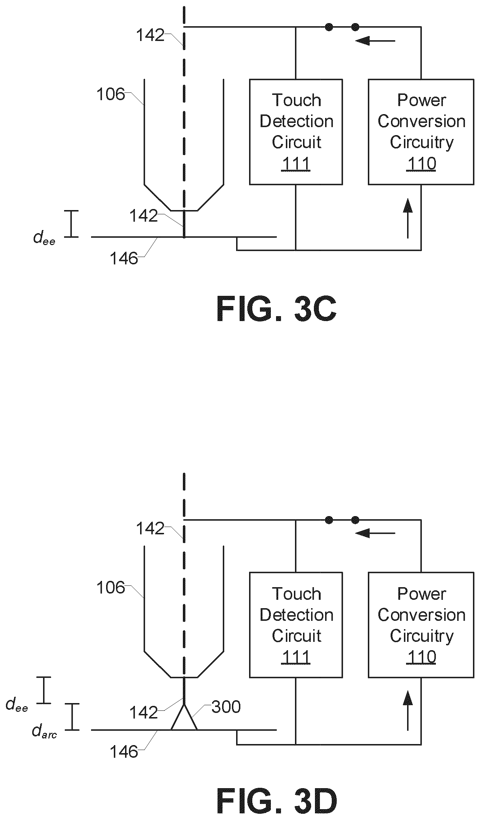

FIG. 3C illustrates a portion of the electrode 142, a portion of the welding torch 106, and the workpiece 146 during the second contacting time period 220. In the example of FIG. 3C, the weld circuit is formed by the power conversion circuitry 110, the electrode 142, and the workpiece 146 (and any intervening connecting circuitry), permitting the arc-starting power to flow between the electrode 142 and the workpiece 146.

Referring still to FIG. 3C and with reference FIG. 2A, the second current magnitude 221 of the arc-starting power is chosen to enable, upon retraction of the electrode 142 from the workpiece 146 by the operator, a robot, and/or the transducer 158, formation of a welding arc, while also providing a period of time wherein the electrode 142 and the workpiece 146 can remain in contact or substantially in contact without melting the electrode 142 (i.e., defining a maximum length of the second contacting time period 220). Since the welding arc is formed by retraction of the electrode 142 by the operator, a robot, and/or the transducer 158 (rather than by, e.g., an automatic retraction of the electrode 142 by the wire feeder 104), the operator or the robot can hold the electrode 142 in contact or substantially in contact with the workpiece 146 for a prolonged period of time. The operator or robot may thereby be provided with time to adjust a contact position and/or orientation of the electrode 142 and/or the welding torch 106 relative to the workpiece 146. This prolonged period of time in which the electrode 142 may remain in contact with the workpiece 146 may be particularly beneficial for inexperienced welding operators, who may utilize the prolonged period of time to better orient and/or position the electrode 142 and/or the welding torch 106 relative to the workpiece 146.

Accordingly, the second current magnitude 221 is chosen to provide a voltage (e.g., greater than or equal to 18 V and less than or equal to 30 V) sufficient to form a welding arc while nonetheless being low enough in current magnitude (e.g., greater than or equal to 20 amps and less than or equal to 80 amps) to provide a time period in which the arc starting current does not melt the electrode 142. In examples, the second current magnitude 221 is further chosen based on a desired current density (i.e., the second current magnitude 221 divided by a surface area of a contact point between the electrode 142 and the workpiece 146). Accordingly, the second current magnitude 221 may be based on a contact surface area of the electrode 142 (i.e., the surface area of the contact point between the electrode 142 and the workpiece 146). In some examples, the control circuitry 112 determines the contact surface area and calculates the second current magnitude 221 based on the contact surface area. In some such examples, the welding torch 106 includes a camera 159 positioned on the welding torch 106 in view of an end of the electrode 142, and the camera 159 captures images and/or video (i.e., visual data) of the end of the electrode 142 and transmits the visual data to the control circuitry 112 such that the control circuitry 112 can utilize the visual data to determine the contact surface area of the electrode 142. The contact surface area of an end of the electrode 142 may be a function of a general shape of the end of the electrode 142 (e.g., a sharp point shape, a blade edge shape, a cylinder shape, a ball shape, etc.).

Referring again to FIG. 2A, and with reference to FIG. 1, at the fourth time 223 the electrode 142 is retracted from the workpiece 146 (by, e.g., the operator, a robot, and/or the transducer 158), resulting in formation of a welding arc. During an initial welding time period 230, the control circuitry 112 identifies the formation of the welding arc and begins providing welding power. Upon identifying the formation of the welding arc, the control circuitry 112 controls the power conversion circuitry 110 to begin transitioning from outputting the arc-starting power to outputting welding power. In some examples, the control circuitry 112 detects the formation of the welding arc using a voltage measured by the voltage monitor 160. In some examples, the control circuitry 112 detects the formation of the welding arc using a current measured by the current monitor 168.

In the example of FIG. 2A, the control circuitry 112 controls the power conversion circuitry 110 to transition from outputting the arc-starting power to outputting welding power by stepping the transition between the arc-starting power and the welding power. Accordingly, during the initial welding time period 230, the control circuitry 112 controls the power conversion circuitry 110 to output a third current magnitude 231. At a fifth time 233, the control circuitry 112 controls the power conversion circuitry 110 to output a fourth current magnitude 241 (i.e., a current magnitude of welding power). Accordingly, a welding time period 240 may be a duration during which a welding arc is maintained between the electrode 142 and the workpiece 146.

In the example of FIG. 2A, the third current magnitude 231 is greater than the second current magnitude 221, and so a transition 232 from the second current magnitude 221 to the third current magnitude 231 is an increase. However, in some other examples, the control circuitry 112 may set the third current magnitude 231 to be lesser than the second current magnitude 221, such that, during the initial welding time period 230, the transition 232 is a decrease. Setting the third current magnitude 231 to be lesser than the second current magnitude 221 may, e.g., reduce spatter.

In the example of FIG. 2A, controlling the power conversion circuitry 110 to transition from the second current magnitude 221 of the arc-starting power to the fourth current magnitude 241 includes only one step (i.e., the third current magnitude 231) and only two transitions (i.e., the transition 232 and a transition 242 between the current magnitudes 231, 241). However, in other examples, the transition from the second current magnitude 221 of the arc-starting power to the fourth current magnitude 241 includes any plurality of steps and/or transitions, and each of the steps and/or transitions may vary in duration. Further, any, some, or all of the transitions may be increases or decreases.

In some other examples, the control circuitry 112 controls the power conversion circuitry 110 to transition from the second current magnitude 221 of the arc-starting power to the fourth current magnitude 241 in a non-stepped transition. In some such examples, the control circuitry 112 controls the power conversion circuitry 110 to transition from the second current magnitude 221 of the arc-starting power to the fourth current magnitude 241 in a ramped transition and/or in a curved transition. For example, the transition from the second current magnitude 221 of the arc-starting power to the fourth current magnitude 241 may be a substantially constant rate of change or a rate of change that grows over time.

Referring again to FIG. 2B, and with reference to FIG. 1, at the fourth time 223, the control circuitry 112 is still controlling the feed motor 152 and/or the assist motor 136 to hold the electrode 142 in the stopped condition 224. Accordingly, during the initial welding time period 230, the control circuitry 112 controls the feed motor 152 and/or the assist motor 136 to transition from holding the electrode 142 in the stopped condition 224 to advancing the electrode 142 at an initial wire feed speed 234, increasing the wire feed speed during a transition 235. At the fifth time 233, the control circuitry 112 controls the feed motor 152 and/or the assist motor 136 to advance the electrode 142 at a target wire feed speed 244 (i.e., a welding operation wire feed speed), increasing the wire feed speed during a transition 245. In examples, the control circuitry 112 controls the feed motor 152 and/or the assist motor 136 to advance the electrode 142 at the target wire feed speed 244 throughout the welding time period 240 (i.e., a duration of the welding operation).

In the example of FIG. 2B, the control circuitry 112 controls the feed motor 152 and/or the assist motor 136 to transition the electrode 142 from the stopped condition 224 to advancing the electrode at the target wire feed speed 244 using a stepped transition (i.e., with the initial wire feed speed 234 as a step). In other examples, the control circuitry 112 controls the feed motor 152 and/or the assist motor 136 to transition the electrode 142 from the stopped condition 224 to advancing the electrode at the target wire feed speed 244 using any plurality of steps and/or transitions. In examples, the control circuitry 112 controls the feed motor 152 and/or the assist motor 136 to transition the electrode 142 from the stopped condition 224 to advancing the electrode at the target wire feed speed 244 using a ramped transition and/or a curved transition.

FIG. 3D illustrates a portion of the electrode 142, a portion of the welding torch 106, and the workpiece 146 during the initial welding time period 230 and/or the welding time period 240. In the example of FIG. 3C, the operator, a robot, and/or the transducer 158 (depicted in FIG. 1) have caused the electrode 142 to separate from the workpiece 146. In examples, separating the electrode 142 from the workpiece 146 includes moving the welding torch 106 such that a tip of the electrode 142 is at least an arc distance (*d_{arc}*) from the workpiece 146. In some such examples, the arc distance (*d_{arc}*) is greater than the electrode extension distance (*dₑₑ*). The separation of the electrode 142 and the workpiece 146 forms a welding arc 300, and welding power flows from the power conversion circuitry 110, to the electrode 142, and across the welding arc 300 to the workpiece 146.

In some examples, the transducer 158 may be used to form the separation between the electrode 142 and the workpiece 146 (by, e.g., being actuated using one or more of the operable inputs 156). In some such examples, upon detecting the formation of the welding arc and/or during the initial welding time period 230, the control circuitry 112 controls the transducer 158 to stop actuating the electrode 142.

Referring again to FIGS. 2A and 2B, and with reference to FIG. 1, in examples, at a sixth time 243, the control circuitry 112 and/or the wire feeder control circuitry 134 receive an indication (e.g., an input signal generated by one or more of the operable inputs 156) to initiate an end of the welding operation. In examples, the control circuitry 112, during an ending time period 250 (starting at the sixth time 243), controls the power conversion circuitry 110 to stop output of the welding power. In some such examples, the current feedback signal 201A thereby approaches a standby level 251 (e.g., substantially 0 amps), decreasing during a transition 252. In examples, the control circuitry 112 and/or the wire feeder control circuitry 134, during the ending time period 250, control the feed motor 152 and/or the assist motor 136 to hold the electrode 142 in a standby condition 254. In some such examples, the standby condition 254 is a stopped condition, and the wire feed speed signal 201B thereby decreases during a transition 255 to substantially 0.

In some examples, ending time period 250 is a transition time period (having, e.g., a pre-determined duration) which returns to the first time 203 such that, after the ending the ending time period 250 (e.g., when the current feedback signal 201A reaches the standby level 251 and/or when the wire feed speed signal 201B reaches the standby condition 254), the pre-contact time period 204 begins again. Accordingly, in some such examples, after the ending time period 250 ends, the control circuitry 112 automatically (e.g., without actuation of one of the operable inputs 156) controls the power conversion circuitry 110 and/or the touch detection circuitry 111 to output the touch detection signal. In examples, looping an end of the ending time period 250 with a beginning of the pre-contact time period 204 can be used in a stich welding operation or another welding operation wherein several welding arcs are generated for short periods of time. Accordingly, in some such examples, the sixth time 243 may automatically occur after a pre-determined amount of time following the fourth time 223 and/or the fifth time 233 (as controlled by, e.g., either or both of the control circuitry 112 and/or the wire feeder control circuitry 134), such that the welding time period 240 and/or the initial welding time period 230 have a pre-determined duration. In examples, an operator or robot may indicate that a stich welding operation is over (i.e., that the ending time period 250 should no longer loop back to the pre-contact time period 204) by actuating one or more of the operable inputs 156.

In examples, any, some, or all of the current magnitudes 211, 221, 231, 241, 251 and/or any other current magnitudes may be controlled based on a voltage-controlled loop, a voltage setpoint, a current-controlled loop, a current setpoint, and/or an inductance setpoint. In examples, any, some, or all of the transitions 222, 232, 242, 252, 215, 225, 235, 245, 255 and/or any other transitions may be or include stepped transitions (e.g., having one step or any plurality of steps), curved transitions, and/or ramped transitions.

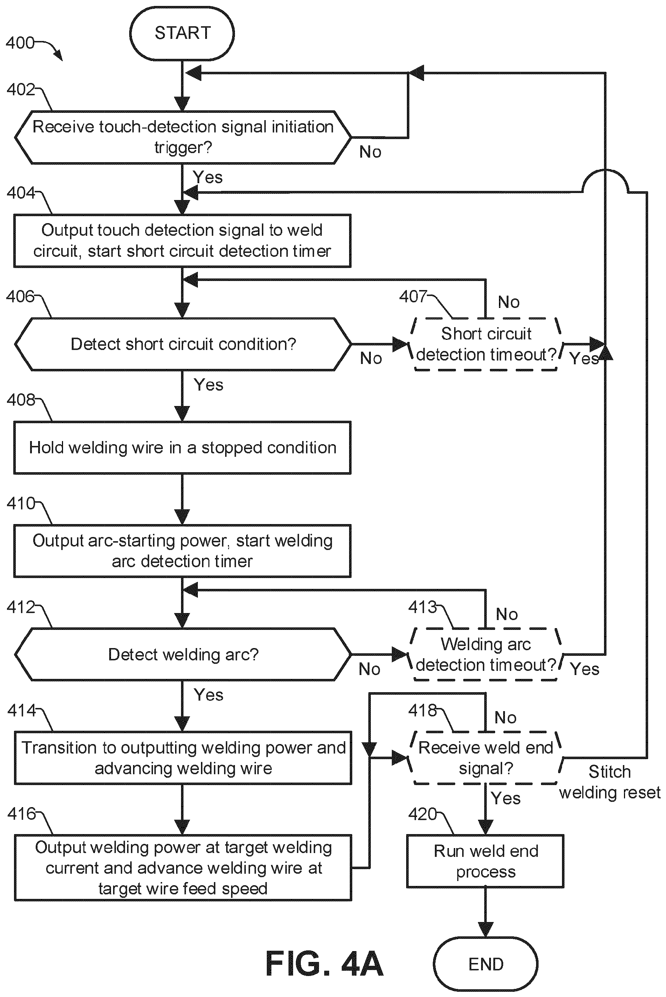

FIG. 4A is a flowchart illustrating example method 400 of conducting a welding operation using a welding power system (e.g., the welding system 100). The method 400 of FIG. 4A may be implemented by control circuitry (e.g., the control circuitry 112 and/or the wire feeder control circuitry 134) by executing machine-readable instructions, such as stored on a non-transitory machine-readable storage device (e.g., the memory device 124).

Referring to FIG. 4A, and with reference to FIGS. 1-2B, at a block 402 (e.g., during the standby time period 202), the control circuitry 112 and/or the wire feeder control circuitry 134 await receipt of a touch-detection signal initiation trigger (e.g., an input signal generated by one or more of the operable inputs 156). At a block 404 (e.g., at the first time 203 and/or during the pre-contact time period 204), once the control circuitry 112 has received the touch-detection signal initiation trigger (e.g., at the first time 203), the control circuitry 112 controls the power conversion circuitry 110 and/or the touch detection circuitry 111 to output a touch detection signal to a weld circuit comprising the electrode 142. In examples, the control circuitry 112 also initiates a short circuit detection timer at the block 404.

In some examples, the control circuitry 112 and/or the wire feeder control circuitry 134 control the feed motor 152 and/or the assist motor 136 to hold the electrode 142 in a stopped condition (e.g., the stopped condition 224) at the block 404 (e.g., for some or all of the pre-contact time period 204). In other examples, the control circuitry 112 and/or the wire feeder control circuitry 134 control the feed motor 152 and/or the assist motor 136 to advance the electrode 142 (e.g., at the run-in speed 214) at the block 404 (e.g., during some or all of the pre-contact time period 204). In some such examples, the control circuitry 112 and/or the wire feeder control circuitry 134 control the feed motor 152 and/or the assist motor 136 to advance the electrode 142 during the pre-contact time period 204 upon receiving an input signal (e.g., a trigger signal) from one or more of the operable inputs 156 (e.g., a welding torch trigger positioned on the welding torch 106).

At a block 406 (e.g., during the pre-contact time period 204), the control circuitry 112 checks for detection of a short circuit condition (i.e., the electrode 142 contacting the workpiece 146). In some examples, the control circuitry 112 detects the short circuit condition by monitoring a voltage feedback signal comprising a measured voltage measured by the voltage monitor 160. In some examples, the control circuitry 112 detects the short circuit condition by monitoring a current feedback signal comprising a measured current measured by the current monitor 168.

In examples, if, at the block 406, the control circuitry 112 does not detect the short circuit condition (e.g., the voltage feedback signal and/or the current feedback signal do not indicate that the short circuit condition has occurred), the control circuitry 112, at a block 407 (e.g., during the pre-contact time period 204), determines whether a short circuit detection timeout has occurred (e.g., the short circuit detection timer initiated in the block 404 has become equal to 0). In other examples, however, no short circuit detection timer is initiated in the block 404, and the control circuitry 112 continues to await detection of the short circuit condition in the block 406 until, e.g., receiving an input signal (generated by, e.g., one or more of the operable inputs 156) comprising an indication to stop outputting the touch detection signal (e.g., the method 400 returns to the block 402).

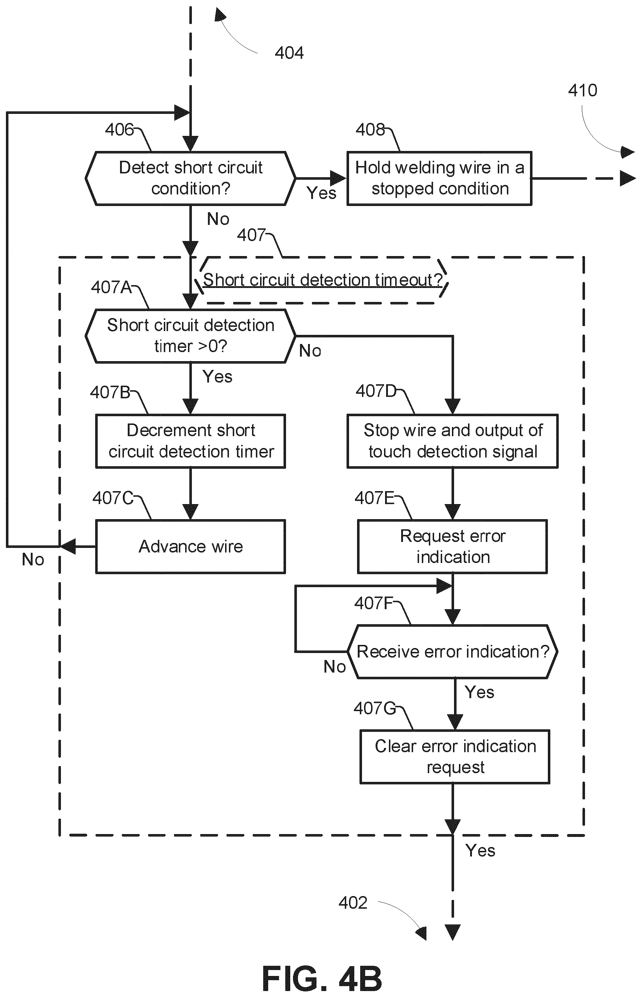

FIG. 4B illustrates a flow chart of an example method of the block 407 of the method 400. Upon not detecting the short circuit condition in the block 406, the control circuitry 112 checks whether the short circuit detection timer, starting at a pre-determined number in the block 404, has come to zero in a block 407A of the block 407. The short circuit detection timer may, for example, measure time in increments of single milliseconds or in increments of any plurality of milliseconds. In examples, until detecting the short circuit condition in the block 406, the control circuitry 112 may check again for the short circuit condition (i.e., return to the block 406) once every increment of time set in the short circuit detection timer.

If, at the block 407A, the control circuitry 112 determines that the short circuit detection timer is greater than zero, the control circuitry 112 decrements the short circuit detection timer (e.g., 1 unit or any plurality of units) at a block 407B. Then, in the example of FIG. 4B, the control circuitry 112 and/or the wire feeder control circuitry 134 controls the feed motor 152 and/or the assist motor 136 to advance the electrode 142 further (e.g., a predetermined number of millimeters) at a block 407C. In other examples, however, the block 407 does not include the block 407C. In some such examples, the control circuitry 112 and/or the wire feeder control circuitry 134 controls the feed motor 152 and/or the assist motor 136 to begin advancing the electrode 142 at the block 404(at, e.g., the run-in speed 214). Following the block 407C, the method 400 returns to the block 406.

If, at the block 407A, the control circuitry 112 determines that the short circuit detection timer is less than or equal to 0, the control circuitry 112 and/or the wire feeder control circuitry 134 then controls the feed motor 152 and/or the assist motor 136 to hold the electrode 142 in a stopped condition (e.g., the stopped condition 224) at a block 407D. Further, and also at the block 407D, the control circuitry 112 controls the power conversion circuitry 110 and/or the touch detection circuitry 111 to stop outputting the touch detection signal. Then, at a block 407E, the control circuitry 112 requests an error indication (from, e.g., the operator). An error indication may include, for example, an indication to restart the method 400, an indication to reset the short circuit detection timer and return to the block 406, etc. In examples, the control circuitry 112 requests the error indication by displaying an error message prompt on the user interface 114 and providing one or more selectable responses or acknowledgements (selectable by, e.g., the operator) in the form of, e.g., one or more of the operable inputs 156 which are positioned on the user interface 114 (e.g., graphics on a touch screen of the user interface 114). In examples, the control circuitry 112 receives an error indication from, e.g., an outside device or a controller of a robot operating the welding system 100. Next, at the block 407F, the control circuitry 112 awaits the error indication. In examples, upon receiving the error indication, the control circuitry 112 clears the error indication request and returns to the block 402 at a block 407G. In other examples, the control circuitry 112 may perform another action after the block 407G, rather than return to the block 402, as instructed by the received error indication. In examples, upon determining that the short circuit detection timer is less than or equal to zero at the block 407A, the method 400 may not include any, some, or all of the blocks 407D, 407E, 407F, 407G, and instead may, e.g., proceed directly to the block 402.

Returning to FIG. 4A, and with reference to FIGS. 1-2B, if, at the block 406, the control circuitry 112 detects a short circuit condition (i.e., that the electrode 142 has contacted the workpiece 146), the control circuitry 112 and/or the wire feeder control circuitry 134 then (during, e.g., the first contacting time period 210) controls the feed motor 152 and/or the assist motor 136 to hold the electrode 142 in a stopped condition. Next, at the block 410 (at, e.g., the third time 213), the control circuitry 112 controls the power conversion circuitry 110 to output an arc-starting power (at, e.g., the second current magnitude 221). In examples, the control circuitry 112 also initiates a welding arc detection timer.

At a block 412 (during, e.g., the second contacting time period 220), the control circuitry 112 checks for detection of a welding arc (i.e., a welding arc forming between the electrode 142 and the workpiece 146). In some examples, the control circuitry 112 detects the welding arc by monitoring a voltage feedback signal comprising a measured voltage measured by the voltage monitor 160. In some examples, the control circuitry 112 detects the welding arc by monitoring a current feedback signal comprising a measured current measured by the current monitor 168.

In examples, if, at the block 412, the control circuitry 112 does not detect the welding arc (e.g., the voltage feedback signal and/or the current feedback signal do not indicate that a welding arc has formed between the electrode 142 and the workpiece 146), the control circuitry 112, at a block 413 (e.g., during the second contacting time period 220), determines whether a welding arc detection timeout has occurred (e.g., the welding arc detection timer initiated in the block 410 has become equal to 0). In other examples, however, no welding arc detection timer is initiated in the block 410, and the control circuitry 112 continues to await detection of the welding arc in the block 412 until, e.g., receiving an input signal (generated by, e.g., one or more of the operable inputs 156) comprising an indication to stop outputting the arc-starting power (e.g., the method 400 returns to the block 402).

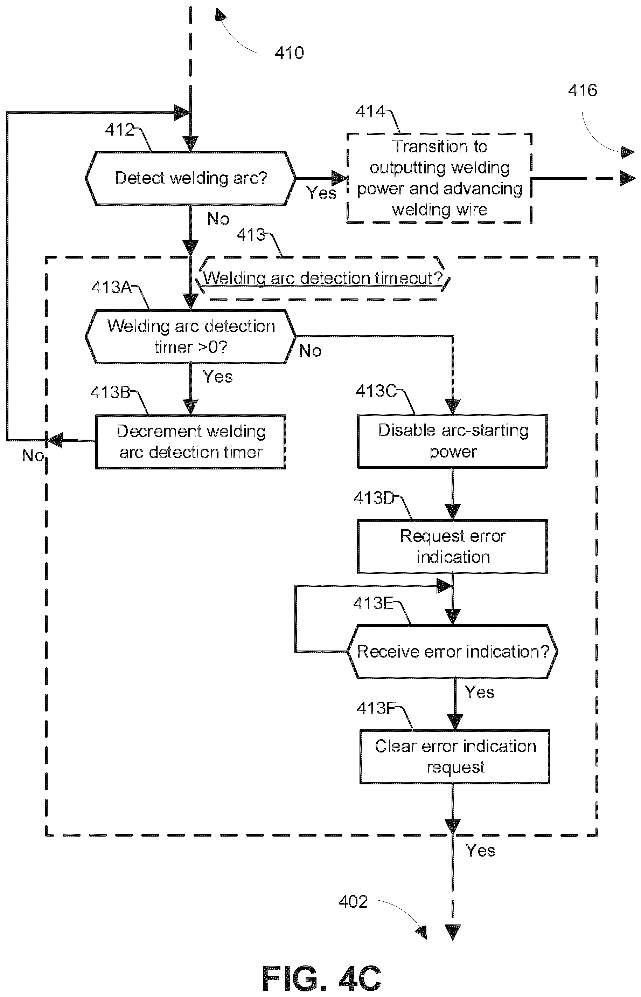

FIG. 4C illustrates a flow chart of an example method of the block 413 of the method 400. Upon not detecting the welding arc in the block 412, the control circuitry 112 checks whether the welding arc detection timer, starting at a pre-determined number in the block 410, has come to zero in a block 413A of the block 407. The welding arc detection timer may, for example, measure time in increments of single milliseconds or in increments of any plurality of milliseconds. In examples, until detecting the welding arc in the block 412, the control circuitry 112 may check again for the welding arc (i.e., return to the block 412) once every increment of time set in the short circuit detection timer.

If, at the block 413A, the control circuitry 112 determines that the welding arc detection timer is greater than zero, the control circuitry 112 decrements the welding arc detection timer (e.g., 1 unit or any plurality of units) at a block 413B. Following the block 413B, the method 400 returns to the block 412.

If, at the block 413A, the control circuitry 112 determines that the welding arc detection timer is less than or equal to 0, the control circuitry 112 then controls the power conversion circuitry 110 to stop outputting the arc-starting power at a block 413C. Then, at a block 413D, the control circuitry 112 requests an error indication (from, e.g., the operator). An error indication may include, for example, an indication to restart the method 400, an indication to reset the welding arc detection timer and return to the block 412, etc. In examples, the control circuitry 112 requests the error indication by displaying an error message prompt on the user interface 114 and providing one or more selectable responses or acknowledgements (selectable by, e.g., the operator) in the form of, e.g., one or more of the operable inputs 156 which are positioned on the user interface 114 (e.g., graphics on a touch screen of the user interface 114). In examples, the control circuitry 112 receives an error indication from, e.g., an outside device or a controller of a robot operating the welding system 100. Next, at the block 413E, the control circuitry 112 awaits the error indication. In examples, upon receiving the error indication, the control circuitry 112 clears the error indication request and returns to the block 402 at a block 413F. In other examples, the control circuitry 112 may perform another action after the block 413F, rather than return to the block 402, as instructed by the received error indication. In examples, upon determining that the welding arc detection timer is less than or equal to zero at the block 413A, the method 400 may not include any, some, or all of the blocks 413C, 413D, 413E, 413F, and instead may, e.g., proceed directly to the block 402.

Returning to FIG. 4A, and with reference to FIGS. 1-2B, if, at the block 412, the control circuitry 112 detects a welding arc (i.e., that the electrode 142 has contacted the workpiece 146), the control circuitry 112 and/or the wire feeder control circuitry 134 then (e.g., at the fourth time 223 and/or during the initial welding time period 230) controls the power conversion circuitry 110 to begin transitioning to outputting welding power (at, e.g., the fourth current magnitude 241). In the block 414, the control circuitry 112 may control the power conversion circuitry 110 to begin transitioning from the arc-starting power (e.g., the second current magnitude 221) to the welding power (e.g., the fourth current magnitude 241) by stepping the current (e.g., at the third current magnitude 231 and/or at one or more other current magnitudes), by ramping the current, and/or by another transition. In the block 414, the control circuitry 112 and/or the wire feeder control circuitry 134 control the feed motor 152 and/or the assist motor 136 to begin transitioning from holding the electrode 142 in the stopped condition (e.g., the stopped condition 224) to advancing the electrode 142 at a target wire feed speed (e.g., the target wire feed speed 244). In the block 414, the control circuitry 112 and/or the wire feeder control circuitry 134 control the feed motor 152 and/or the assist motor 136 to begin transitioning from holding the electrode 142 in the stopped condition (e.g., the stopped condition 224) to advancing the electrode 142 at a target wire feed speed (e.g., the target wire feed speed 244) by stepping the wire feed speed (e.g., the initial wire feed speed 234 and/or one or more other wire feed speeds), by ramping the wire feed speed, and/or by another transition.

In the block 414, the control circuitry 112 may monitor the welding arc to determine whether a flawed start has occurred (e.g., a welding arc has improperly been formed). In examples, the control circuitry 112 determines whether a flawed start has occurred by monitoring a voltage feedback signal comprising a measured voltage measured by the voltage monitor 160. In some examples, the control circuitry 112 determines whether a flawed start has occurred by monitoring a current feedback signal comprising a measured current measured by the current monitor 168. Upon determining that a flawed start has occurred, the control circuitry 112 controls the power conversion circuitry 110 to stop outputting the welding power and the control circuitry 112 and/or the wire feeder control circuitry 134 control the feed motor 152 and/or the assist motor 136 to stop advancing the electrode 142.

Next, at the block 416 (at, e.g., the fifth time 233 and/or during the welding time period 240), the control circuitry 112 controls the power conversion circuitry 110 to output welding power (at, e.g., the fourth current magnitude 241. In the block 416, the control circuitry 112 and/or the wire feeder control circuitry 134 control the feed motor 152 and/or the assist motor 136 to advance the electrode 142 at a target wire feed speed (e.g., the target wire feed speed 244). Accordingly, welding can begin occurring at the block 416. Welding may continue to occur (i.e., a welding arc is maintained between the electrode 142 and the workpiece 146) until, at a block 418, the control circuitry 112 receives a weld end signal (e.g., an input signal generated by one or more of the operable inputs 156) indicating that the welding operation should end. Until receiving the weld end trigger, the control circuitry 112 may continue to control the power conversion circuitry 110 to output welding power and/or the control circuitry 112 and/or the wire feeder control circuitry 134 may continue control the feed motor 152 and/or the assist motor 136 to advance the electrode 142 at a target wire feed speed. In examples, the control circuitry 112 and/or the wire feeder control circuitry 134 may vary the target wire feed speed according to, e.g., indications in input signals received from one or more of the operable inputs 156.

Upon receiving the weld end trigger, the method 400 proceeds to a block 420 (e.g., at the sixth time 243), and the control circuitry 112 controls the power conversion circuitry 110 to stop outputting welding power. At the block 420, the control circuitry 112 and/or the wire feeder control circuitry 134 also control the feed motor 152 and/or the assist motor 136 to stop advancing the electrode 142 at the target wire feed speed (e.g., to holding the electrode 142 in a stopped condition.

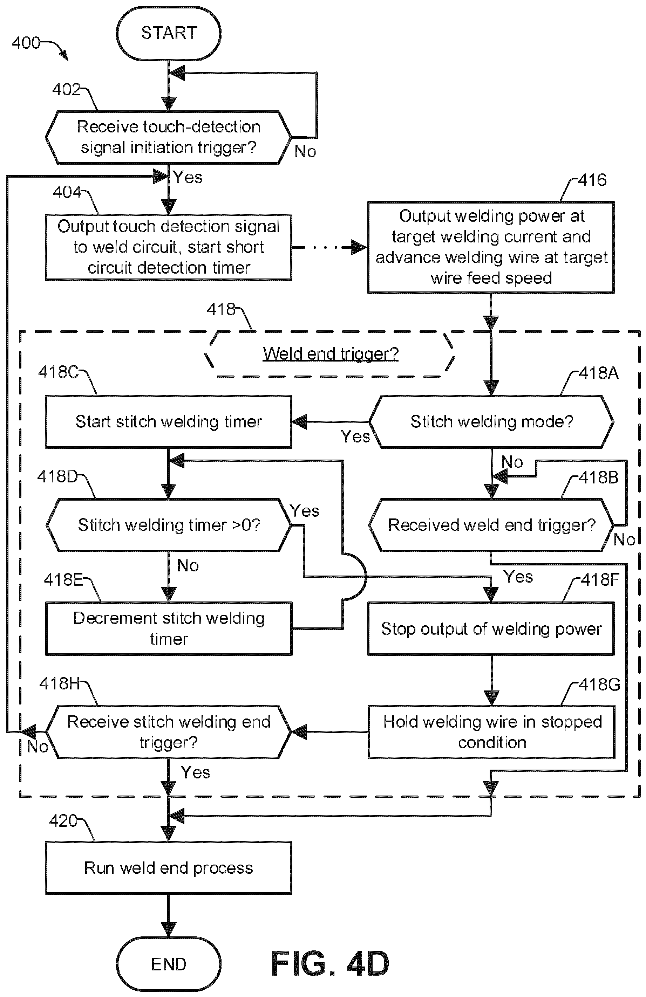

FIG. 4D illustrates an example of a method of the block 418 used in, for example, a stitch welding operation or another welding operation wherein several, short-term welding arcs are needed. At a block 418A (e.g., at either of the times 223, 233 and/or during either or both of the time periods 230, 240), the control circuitry 112 determines whether the welding operation is a stitch welding operation (or other such operation). For example, prior to the block 402, an operator may indicate that the welding operation is a stitch welding operation using one or more of the operable inputs 156 and/or the user interface 114. If the control circuitry 112 determines that the welding operation is not a stitch welding operation (or other such operation), the method 400 proceeds to the block 418B, and the control circuitry 112 waits to receive a weld end trigger, as described above.

Upon determining, at the block 418A, that the welding operation is a stitch welding operation (or other such operation), the control circuitry 112 starts a stitch welding timer at a block 418C (e.g., at either of the times 223, 233 and/or during either or both of the time periods 230, 240). The stitch welding timer functions similarly to the functionality of the short circuit detection timer of the block 407 and the welding arc detection timer of the block 413, as described above. At a block 418D, the control circuitry 112 determines whether the stitch welding timer is greater than zero. If the stitch welding timer is greater than 0, the control circuitry 112 decrements the stitch welding timer at a block 418E then returns to the block 418D. If, at the block 418D, the control circuitry 112 determines that the stitch welding timer is less than or equal to zero, then the control circuitry 112 controls the power conversion circuitry 110 to stop outputting the welding power at a block 418F (e.g., at the sixth time 243 and/or during the ending time period 250) and the control circuitry 112 and/or the wire feeder control circuitry 134 control the feed motor 152 and/or the assist motor 136 to stop advancing the electrode 142 at the target wire feed speed at the block 418G (e.g., at the sixth time 243 and/or during the ending time period 250). Accordingly, the stich welding timer defines a duration during which welding power is output by the power conversion circuitry 110. The duration defined by the stitch welding timer may be, for example, greater than or equal to 2 seconds and less than or equal to 10 seconds.

The control circuitry 112 then, at a block 418H, determines whether a stitch welding end trigger (e.g., an input signal generated by one or more of the operable inputs 156 indicating that the stitch welding operation should end) has been received. If a stitch welding end trigger has not been received, then the control circuitry 112 returns to the block 402. If a stich welding end trigger has been received, then the control circuitry 112 initiates a weld end process at the block 420, as described above. Accordingly, in the example of FIG. 4D, the method 400 may automatically (i.e., without actuation of one or more of the operable inputs 156) loop indefinitely, providing several welding arcs, each for a duration defined by the stitch welding timer.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1.A welding system, comprising:
   a wire feeder configured to feed welding wire to a welding torch;
   a power conversion circuitry configured to convert input power to welding power; and
   control circuitry configured to:
      control the power conversion circuitry to output a touch detection signal to a weld circuit comprising the welding wire;
      monitor the weld circuit to detect a short circuit condition;
      in response to detection of the short circuit condition:
         control the power conversion circuitry to output an arc-starting power to the weld circuit, and
         control the wire feeder to hold the welding wire in a stopped condition;
      while the wire feeder is in the stopped condition, monitor the weld circuit to detect a welding arc; and
      in response to detection of the welding arc:
         control the power conversion circuitry to output the welding power to the weld circuit; and
         control the wire feeder to transition to advancing the welding wire.
Clause 2. The welding system of clause 1, wherein the control circuitry is further configured to, in response to the detection of the welding arc:
   control the wire feeder to advance the welding wire based on an initial wire feed speed for a first duration; and
   control the wire feeder to advance the welding wire based on a target wire feed speed while outputting the welding power based on a target welding voltage.
Clause 3. The welding power system of clause 2, wherein the control circuitry is further configured to control a wire feed speed of the wire feeder to transition from the initial wire feed speed to the target wire feed speed by ramping the wire feed speed.
Clause 4. The welding system of clause 2, wherein the control circuitry is further configured to control a wire feed speed of the wire feeder to transition from the initial wire feed speed to the target wire feed speed by stepping the wire feed speed.
Clause 5. The welding system of clause 1, wherein the control circuitry is further configured to:
   in response to detection of the welding arc, control the power conversion circuitry to output the welding power to the weld circuit for a first duration; and
   after the first duration, control the power conversion circuitry to output the touch detection signal.
Clause 6. The welding system of clause 1, wherein the control circuitry is further configured to:
   in response to a trigger signal, control the wire feeder to advance the welding wire; and
   in response to the detection of the short circuit condition, control the wire feeder to stop the welding wire.
Clause 7. The welding system of clause 1, wherein the control circuitry is further configured to:
   determine an arc-starting current magnitude based on a contact surface area of the welding wire; and
   in response to the detection of the short circuit condition, control the power conversion circuitry to output the arc-starting power to the weld circuit based on the arc-starting current magnitude.
Clause 8. The welding system of clause 7, further comprising a welding torch and a camera, wherein:
   the welding torch is configured to receive the welding wire from the wire feeder;
   the camera is positioned on the welding torch in view of an end of the welding wire;
   the camera is configured to transmit visual data of the welding wire to the control circuitry; and
   the control circuitry is further configured to determine the contact surface area of the welding wire using the visual data.
Clause 9. The welding system of clause 1, further comprising a user interface configured to transmit an input signal, wherein the control circuitry is further configured to:
   determine an arc-starting current magnitude based on the input signal; and
   in response to the detection of the short circuit condition, control the power conversion circuitry to output the arc-starting power to the weld circuit based on the calculated current magnitude.
Clause 10. The welding system of clause 1, further comprising a control system configured to receive a first indication to initiate output of the touch detection signal and to transmit the first indication to the control circuitry, wherein the control circuitry is further configured to control the power conversion circuitry to output the touch detection signal to the weld circuit in response to receiving the first indication from the control system.
Clause 11. The welding system of clause 10, further comprising a welding torch configured to:
   receive the welding wire from the wire feeder; and
   conduct current from the power conversion circuitry to the welding wire.
Clause 12. The welding system of clause 11, wherein:
   the welding torch comprises a transducer physically coupled to the welding torch configured to actuate the welding wire to induce a motion of the welding wire; and
   the control circuitry is further configured to:
      in response to the detection of the short circuit condition, control the transducer to actuate the welding wire; and
      in response to detection of the welding arc, control the transducer to stop actuating the welding wire.
Clause 13. The welding system of clause 11, wherein:
   the control system comprises a first operable input positioned on the welding torch and configured to receive the first indication by detecting a first action performed on the first operable input; and
   the control system is further configured to receive a second indication to advance the welding wire and transmit the second indication to the control circuitry, wherein, upon receiving the second indication, the control circuitry controls the wire feeder to advance the welding wire.
Clause 14. The welding system of clause 13, wherein:
   the control system further comprises a second operable input; and
   the control system is further configured to receive the second indication by detecting a second action performed on the second user operable input.
Clause 15. The welding system of clause 1, wherein:
   the touch detection signal comprises a first current magnitude;
   the arc-starting power comprises a second current magnitude greater than the first current magnitude; and
   the welding power comprises a third current magnitude greater than the second current magnitude.
Clause 16. The welding system of clause 15, wherein the third current magnitude is based on a voltage-controlled control loop and a voltage setpoint.
Clause 17. The welding system of clause 15, wherein the control circuitry is further configured to control the power conversion circuitry to ramp from the second current magnitude to the third current magnitude in response to the detection of the welding arc.
Clause 18. The welding system of clause 15, wherein the control circuitry is further configured to control the power conversion circuitry to step from the second current magnitude to the third current magnitude in response to the detection of the welding arc.
Clause 19. The welding system of clause 1, further comprising a voltage sensor configured to measure a measured voltage of the weld circuit and transmit the measured voltage to the control circuitry, wherein the control circuitry is further configured to detect the short circuit condition based on the measured voltage and detect the welding arc based on the measured voltage.
Clause 20. The welding system of clause 1, further comprising a current sensor configured to measure a measured current of the weld circuit and transmit the measured current to the control circuitry, wherein the control circuitry is configured to detect the short circuit condition based on the measured current and detect the welding arc based on the measured current.

## Claims

1. A welding system, comprising:
a wire feeder configured to feed welding wire to a welding torch;
a power conversion circuitry configured to convert input power to welding power; and
control circuitry configured to:
control the power conversion circuitry to output a touch detection signal to a weld circuit comprising the welding wire;
monitor the weld circuit to detect a short circuit condition;
in response to detection of the short circuit condition:
control the power conversion circuitry to output an arc-starting power to the weld circuit, and
control the wire feeder to hold the welding wire in a stopped condition;
while the wire feeder is in the stopped condition, monitor the weld circuit to detect a welding arc; and
in response to detection of the welding arc:
control the power conversion circuitry to output the welding power to the weld circuit; and
control the wire feeder to transition to advancing the welding wire.

2. The welding system of claim 1, wherein the control circuitry is further configured to, in response to the detection of the welding arc:
control the wire feeder to advance the welding wire based on an initial wire feed speed for a first duration; and
control the wire feeder to advance the welding wire based on a target wire feed speed while outputting the welding power based on a target welding voltage.

3. The welding power system of claim 2, wherein the control circuitry is further configured to control a wire feed speed of the wire feeder to transition from the initial wire feed speed to the target wire feed speed by ramping the wire feed speed.

4. The welding system of claim 2, wherein the control circuitry is further configured to control a wire feed speed of the wire feeder to transition from the initial wire feed speed to the target wire feed speed by stepping the wire feed speed.

5. The welding system of claim 1, wherein the control circuitry is further configured to:
in response to detection of the welding arc, control the power conversion circuitry to output the welding power to the weld circuit for a first duration; and
after the first duration, control the power conversion circuitry to output the touch detection signal.

6. The welding system of claim 1, wherein the control circuitry is further configured to:
in response to a trigger signal, control the wire feeder to advance the welding wire; and
in response to the detection of the short circuit condition, control the wire feeder to stop the welding wire.

7. The welding system of claim 1, wherein the control circuitry is further configured to:
determine an arc-starting current magnitude based on a contact surface area of the welding wire; and
in response to the detection of the short circuit condition, control the power conversion circuitry to output the arc-starting power to the weld circuit based on the arc-starting current magnitude.

8. The welding system of claim 7, further comprising a welding torch and a camera, wherein:
the welding torch is configured to receive the welding wire from the wire feeder;
the camera is positioned on the welding torch in view of an end of the welding wire;
the camera is configured to transmit visual data of the welding wire to the control circuitry; and
the control circuitry is further configured to determine the contact surface area of the welding wire using the visual data.

9. The welding system of claim 1, further comprising a user interface configured to transmit an input signal, wherein the control circuitry is further configured to:
determine an arc-starting current magnitude based on the input signal; and
in response to the detection of the short circuit condition, control the power conversion circuitry to output the arc-starting power to the weld circuit based on the calculated current magnitude.

10. The welding system of claim 1, further comprising a control system configured to receive a first indication to initiate output of the touch detection signal and to transmit the first indication to the control circuitry, wherein the control circuitry is further configured to control the power conversion circuitry to output the touch detection signal to the weld circuit in response to receiving the first indication from the control system.

11. The welding system of claim 10, further comprising a welding torch configured to:
receive the welding wire from the wire feeder; and
conduct current from the power conversion circuitry to the welding wire,:
and optionally wherein the welding torch comprises a transducer physically coupled to the welding torch configured to actuate the welding wire to induce a motion of the welding wire; and
the control circuitry is further configured to:
in response to the detection of the short circuit condition, control the transducer to actuate the welding wire; and
in response to detection of the welding arc, control the transducer to stop actuating the welding wire.

12. The welding system of claim 11, wherein:
the control system comprises a first operable input positioned on the welding torch and configured to receive the first indication by detecting a first action performed on the first operable input; and
the control system is further configured to receive a second indication to advance the welding wire and transmit the second indication to the control circuitry, wherein, upon receiving the second indication, the control circuitry controls the wire feeder to advance the welding wire,
and optionally wherein:
the control system further comprises a second operable input; and
the control system is further configured to receive the second indication by detecting a second action performed on the second user operable input.

13. The welding system of claim 1, wherein:
the touch detection signal comprises a first current magnitude;
the arc-starting power comprises a second current magnitude greater than the first current magnitude; and
the welding power comprises a third current magnitude greater than the second current magnitude
and optionally wherein the third current magnitude is based on a voltage-controlled control loop and a voltage setpoint.

14. The welding system of claim 13, wherein the control circuitry is further configured to control the power conversion circuitry to ramp from the second current magnitude to the third current magnitude in response to the detection of the welding arc or wherein the control circuitry is further configured to control the power conversion circuitry to step from the second current magnitude to the third current magnitude in response to the detection of the welding arc.

15. The welding system of claim 1, further comprising a voltage sensor configured to measure a measured voltage of the weld circuit and transmit the measured voltage to the control circuitry, wherein the control circuitry is further configured to detect the short circuit condition based on the measured voltage and detect the welding arc based on the measured voltage,
or wherein the welding system further comprising a current sensor configured to measure a measured current of the weld circuit and transmit the measured current to the control circuitry, wherein the control circuitry is configured to detect the short circuit condition based on the measured current and detect the welding arc based on the measured current.
